# EUROPEAN PATENT SPECIFICATION

(11) **EP 1 466 440 B1**
(45) Date of publication and mention of the grant of the patent: **15.12.2010**
(21) Application number: 03705815.3
(22) Date of filing: 16.01.2003
(51) Int. Cl.: H04L 12/18

(54) **Method and apparatus for flow treatment and mapping on multicast/broadcast services**
Verfahren und Vorrichtung zur Bearbeitung und zur Abbildungen eines Flusses auf Multicast/Broadcast Dienste
Procédé et appareil de traitement et mise en correspondance de flux concernant des services de multidiffusion/diffusion

(30) Priority: 16.01.2002 US 51777
(43) Date of publication of application: 13.10.2004
(73) Proprietor: QUALCOMM INCORPORATED, San Diego, CA 92121 (US)
(72) Inventor: HSU, Raymond T., San Diego, CA 92127 (US)
(74) Representative: Wagner, Karl H.
(86) International application number: PCT/US2003/001539
(87) International publication number: WO 2003/063417

(56) References cited:
- ETSI: "Digital cellular telecommunications system (Phase 2+) (GSM);Universal Mobile Telecommunications System (UMTS);Interworking between the Public Land Mobile Network (PLMN) supporting Packet Based services and Packet Data Networks (PDN) (3GPP TS 29.061 version 3.7.0 Release 1999)" ETS TS 129 061 V3.7.0, XX, XX, September 2001 (2001-09), pages 1-71, XP002244647
- ENGAN EFFNET, CASNER: "RFC 2509: IP Header Compression over PPP" REQUEST FOR COMMENTS, February 1999 (1999-02), pages 1-10, XP002251751 Bremen

## Description

### Field

The present invention relates to wireless communication systems generally and specifically, to methods and apparatus for flow treatment and flow mapping on broadcast/multicast services.

### Background

There is an increasing demand for packetized data services over wireless communication systems. As traditional wireless communication systems are designed for voice communications, the extension to support data services introduces many challenges. Specifically, provision of uni-directional services, such as broadcast service where video and audio information is streamed to a subscriber, has a unique set of requirements and goals. Such services may have large bandwidth requirements, wherein system designers seek to minimize transmission of overhead information. Additionally, specific information is needed to forward and/or access the broadcast transmissions, such as processing parameters and protocols. A problem exists in transmitting the broadcast-specific information while optimizing use of available bandwidth.

There is a need, therefore, for an efficient and accurate method of transmitting data in a wireless communication system. Further, there is a need for an efficient and accurate method of providing service-specific information.

Further attention is drawn to the document ETSI: "Digital cellular telecommunications system (Phase 2+) (GSM);Universal Mobile Telecommunications System (UMTS); Interworking between the Public Land Mobile Network (PLMN) supporting Packet Based services and Packet Data Networks (PDN) (3GPP TS 29.061 version 3.7.0 Release 1999)" ETS TS 129 061 V3.7.0, XX, XX, September 2001 (2001-09), pages 1-71, XP002244647. The document describes packet based services in a GSM system and how to accommodate IP multicast traffic. For this purpose a GGSN supports IGMP and one or more inter-Router Multicast protocols. Multicast packets are - upon receipt by the GGSN - copied and sent as point-to-point packets to each mobile of the multicast group.

Attention is also drawn to ENGAN EFFNET, CASNER: "RFC 2509: IP Header Compression over PPP" REQUEST FOR COMMENTS, February 1999 (1999-02), pages 1-10, XP002251751, which describes an option for negotiating the use of header compression on IP datagrams transmitted over a Point-to-Point protocol.

### SUMMARY OF THE INVENTION

In accordance with the present invention, a method for supporting broadcast service, as set forth in claim 1, a packet data serving node, as set forth in claim 11 and a base station as set forth in claim 21, are provided. Embodiments of the invention are claimed in the dependent claims.

### BRIEF DESCRIPTION OF THE DRAWINGS

FIG. 1 is a diagram of a spread spectrum communication system that supports a number of users.

FIG. 2 is a block diagram of the communication system supporting broadcast transmissions.

FIG. 3 is a block diagram of the communication system supporting broadcast transmissions.

FIG. 4 is a block diagram illustrating connections between a packet data serving node and base stations.

FIG. 5 is a flow diagram for accessing a broadcast service in a wireless communication system topology.

FIG. 6 is a block diagram of an embodiment of flow treatment and mapping data.

FIG. 7 is a block diagram of flow treatment and mapping data appended to an A11 registration request message.

FIG. 8 is a block diagram illustrating flow treatment and mapping data as part of the A11 registration request message.

FIG. 9 is a flow diagram for accessing a broadcast service in a wireless communication system topology illustrating flow treatment and mapping data being sent with the A11 registration request.

FIG. 10 is a flow diagram for accessing a broadcast service in a wireless communication system topology illustrating flow treatment and mapping data being sent after the A11 registration request.

FIG. 11 is a system overhead parameter message configuration.

FIG. 12 is a block diagram of a packet data serving node.

FIG. 13 is a flow diagram of flow treatment and flow mapping for multicast/broadcast service in a wireless communication system.

FIG. 14 is a block diagram of the communication system supporting multicast/broadcast illustrating two packet data serving nodes and two mobile stations.

FIG. 15 is a block diagram of the communication system supporting multicast/broadcast illustrating a PDSN-to-PDSN handoff.

### DETAILED DESCRIPTION

The word "exemplary" is used exclusively herein to mean "serving as an example, instance, or illustration." Any embodiment described herein as "exemplary" is not necessarily to be construed as preferred or advantageous over other embodiments. While the various aspects of the embodiments are presented in drawings, the drawings are not necessarily drawn to scale unless specifically indicated.

An exemplary embodiment of a wireless communication system employs a method of header compression that reduces the size of each header while satisfying the accuracy and transmission requirements of the system. The exemplary embodiment supports a uni-directional broadcast service. The broadcast service provides IP packets to multiple users. Typically the IP packets comprise video and/or audio streams. Subscribers to the broadcast service "tune in" to a designated channel to access the broadcast transmission. As the bandwidth requirement for high speed transmission of video broadcasts is great, it is desirable to reduce the size of any overhead associated with such broadcast transmission.

Sometimes broadcast service may be used as a service that sends information to a group of users based on their geographic location. This could also be considered "un-addressed" messaging. Examples would be to broadcast local information such as traffic or weather alerts based on a cell/sector or specific paging zone. All users in that area that are capable of receiving broadcast information would receive it.

Broadcast services may also be used for multicasting. Multicast may refer to the ability to broadcast information to a specific set of users based on their subscription to a user group. The user group may be maintained by an administrator. In addition, the user group may be publicly subscribable (e.g., sign-up for advertisement, stock quotes, etc.), or it may be closed to public subscription (e.g., corporate list). The multicast list may also be configured to have the mobile device acknowledge receipt of the message as defined by the user group administrator. This could be considered addressable messaging.

Multicast user groups are generally considered to be closed groups. In these groups a member typically subscribes to the service (public multicast group) by sending a request to the administrator, by some web interface, or other mechanism. A private multicast group is restricted to membership explicitly by the administrator manually adding members.

Broadcast services can also be divided into public and private groups. A public broadcast group is used for sending geographic specific information. All devices in the specific geographic area that have broadcast capability are in the public group and will receive this information. Examples of broadcast information for this public broadcast type are emergency weather alerts, traffic conditions, etc. Private broadcast groups are targeted to sending specific information to a specific group of devices in a particular area. One example of this type of service would be location-based advertising. One possible scenario for this example is where a user may elect to receive specific advertisements when he or she is at a mall, but not at other times.

The following discussion develops the exemplary embodiment by first presenting a spread-spectrum wireless communication system generally. Next, the broadcast service is introduced, wherein the service is referred to as High Speed Broadcast Service (HSBS). Interfaces between the base station and the packet data serving node are introduced for user traffic and signaling. The messages for establishing an A10 connection for user traffic are discussed. Flow treatment and mapping data for conveying treatment and mapping information to the packet data serving node is illustrated and explained. Examples of sending the flow treatment and mapping data from the base station to the packet data serving node are shown. The details of mapping a flow to the correct interface, presenting the use of a service option parameter to define the specifics of a compression algorithm are shown. Finally, several benefits of using the flow treatment and mapping data to convey treatment and mapping information are set forth.

Note that the exemplary embodiment is provided as an exemplar throughout this discussion; however, alternate embodiments may incorporate various aspects without departing from the scope of the present invention. Specifically, the present invention is applicable to a data processing system, a wireless communication system, a uni-directional broadcast system, and any other system desiring efficient transmission of information.

### Wireless Communication System

The exemplary embodiment employs a spread-spectrum wireless communication system, supporting a broadcast service. Wireless communication systems are widely deployed to provide various types of communication such as voice, data, and so on. These systems may be based on code division multiple access (CDMA), time division multiple access (TDMA), or some other modulation techniques. A CDMA system provides certain advantages over other types of systems, including increased system capacity.

A system may be designed to support one or more standards such as the "TIA/EIA/IS-95-B Mobile Station-Base Station Compatibility Standard for Dual-Mode Wideband Spread Spectrum Cellular System" referred to herein as the IS-95 standard, the standard offered by a consortium named "3rd Generation Partnership Project" referred to herein as 3GPP, and embodied in a set of documents including Document Nos. 3G TS 25.211, 3G TS 25.212, 3G TS 25.213, and 3G TS 25.214, 3G TS 25.302, referred to herein as the W-CDMA standard, the standard offered by a consortium named "3rd Generation Partnership Project 2" referred to herein as 3GPP2, and TR-45.5 referred to herein as the cdma2000 standard, formerly called IS-2000 MC.

Each standard specifically defines the processing of data for transmission from base station to mobile, and vice versa. As an exemplary embodiment the following discussion considers a spread-spectrum communication system consistent with the CDMA200 standard of protocols. Alternate embodiments may incorporate another standard. Still other embodiments may apply the compression methods disclosed herein to other types of data processing systems.

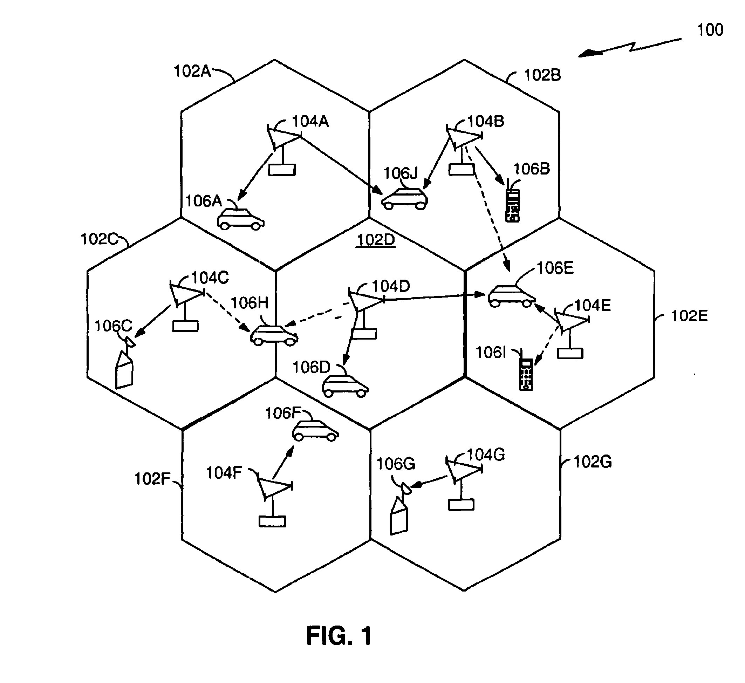

FIG. 1 serves as an example of a communications system 100 that supports a number of users and is capable of implementing at least some aspects of the embodiments discussed herein. Any of a variety of algorithms and methods may be used to schedule transmissions in system 100. System 100 provides communication for a number of cells 102A-102G, each of which is serviced by a corresponding base station 104A-104G, respectively. In the exemplary embodiment, some of the base stations 104 have multiple receive antennas and others have only one receive antenna. Similarly, some of the base stations 104 have multiple transmit antennas, and others have single transmit antennas. There are no restrictions on the combinations of transmit antennas and receive antennas. Therefore, it is possible for a base station 104 to have multiple transmit antennas and a single receive antenna, or to have multiple receive antennas and a single transmit antenna, or to have both single or multiple transmit and receive antennas.

Terminals 106 in the coverage area may be fixed (i.e., stationary) or mobile. As shown in FIG. 1, various terminals 106 are dispersed throughout the system. Each terminal 106 communicates with at least one and possibly more base stations 104 on the downlink and uplink at any given moment depending on, for example, whether soft handoff is employed or whether the terminal is designed and operated to (concurrently or sequentially) receive multiple transmissions from multiple base stations. Soft handoff in CDMA communications systems is well known in the art and is described in detail in U.S. Patent No. 5,101,501, entitled "Method and system for providing a Soft Handoff in a CDMA Cellular Telephone System", which is assigned to the assignee of the present invention.

The downlink refers to transmission from the base station 104 to the terminal 106, and the uplink refers to transmission from the terminal 106 to the base station 104. In the exemplary embodiment, some of terminals 106 have multiple receive antennas and others have only one receive antenna. In FIG. 1, base station 104A transmits data to terminals 106A and 106J on the downlink, base station 104B transmits data to terminals 106B and 106J, base station 104C transmits data to terminal 106C, and so on.

### High Speed Broadcast System (HSBS)

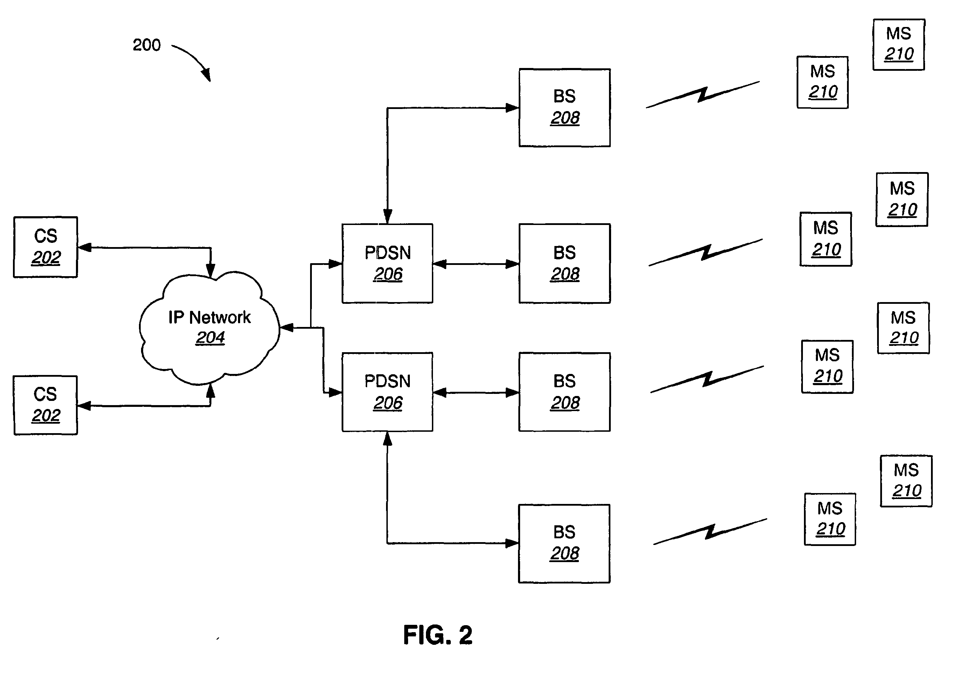

A wireless communication system 200 is illustrated in FIG. 2, wherein IP packets are provided by one or more Content Servers (CSs) 202 via an IP network 204 to one or more Packet Data Serving Nodes (PDSNs) 206. A CS 202 provides data that is transmitted as Internet Protocol data packets ("IP packets") across the IP network 204. Many different kinds of data may be transmitted by the CS 202. For example, audio data, video data, textual data, electronic files, etc., may be transmitted by the CS 202 through the IP network 204. Video and audio information may be from televised programming or a radio transmission. Thus, the CS 202 may be a server configured to serve video data, audio data, etc. In one embodiment, the CS 202 may be a web server connected to the Internet and functioning to serve data to users browsing the World Wide Web. The IP network 204 may be the Internet, an intranet, a private IP network, etc.

The PDSN 206 receives and processes the IP packets to transmit them to one or more Base Stations 208 (BSs). As shown, each PDSN 206 is in electronic communication with one or more BSs 208. Once a BS 208 receives the data, it then sends the data to one or more Mobile Stations 210 (MS). An MS 210 corresponds to a terminal 106 of FIG. 1. Each BS 208 may serve one or more MSs 210. Typically the BS 208 serves many MSs 210.

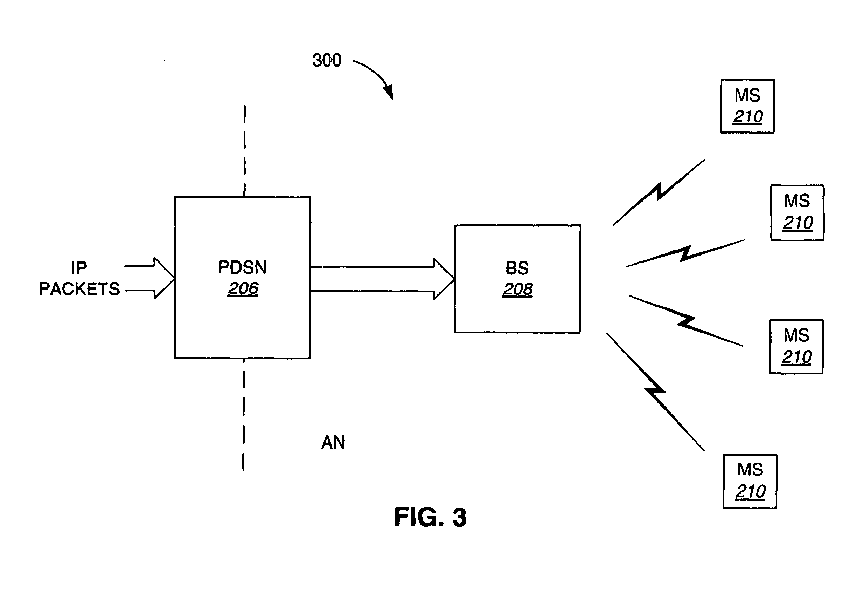

Referring now to FIG. 3, as mentioned, the information from a CS 202 is provided as packetized data, such as in IP packets. The PDSN 206 processes the IP packets for distribution within an Access Network (AN) 300. As illustrated, the AN 300 is defined as the portions of the system 200 including a BS 208 in communication with multiple Mobile Stations (MSs) 210. The PDSN 206 is coupled to the BS 208. For HSBS service, the BS 208 receives the stream of information from the PDSN 206 and provides the information on a designated channel to subscribers within the system 200. Note that alternate embodiments may implement a Packet Control Function (PCF) mode between a PSDN and a BS. Still other embodiments may implement a PCF and BS into one mode and/or unit.

The HSBS is a stream of information provided over an air interface in a wireless communication system. The "HSBS channel" refers to a single logical HSBS broadcast session as defined by broadcast content. Note that the content of a given HSBS channel may change with time, e.g., 7am News, 8am Weather, 9am Movies, etc. The time based scheduling is analogous to a single TV channel. The "Broadcast channel" refers to a single forward link physical channel, i.e., a given Walsh Code that carries broadcast traffic. The Broadcast Channel, BCH, corresponds to a single CDM channel.

A single broadcast channel can carry one or more HSBS channels; in this case, the HSBS channels will be multiplexed in a Time-Division Multiplex (TDM) fashion within the single broadcast channel. In one embodiment, a single HSBS channel is provided on more than one broadcast channel within a sector. In another embodiment, a single HSBS channel is provided on different frequencies to serve subscribers in those frequencies.

According to the exemplary embodiment, the system 100 illustrated in FIG. 1 supports a high-speed multimedia broadcasting service referred to as High-Speed Broadcast Service (HSBS). The broadcast capabilities of the service are intended to provide programming at a data rate sufficient to support video and audio communications. As an example, applications of the HSBS may include video streaming of movies, sports events, etc. The HSBS service is a packet data service based on the Internet Protocol (IP).

According to the exemplary embodiment, a service provider is referred to as the CS 202, wherein the CS 202 advertises the availability of such high-speed broadcast service to the system users. Any user desiring to receive the HSBS service may subscribe with the CS 202. The subscriber is then able to scan the broadcast service schedule in a variety of ways that may be provided by the CS 202. For example, the broadcast content may be communicated through advertisements, Short Management System (SMS) messages, Wireless Application Protocol (WAP), and/or some other means generally consistent with and convenient for mobile wireless communications. Base Stations 208 (BSs) transmit HSBS related parameters in overhead messages, such as those transmitted on channels and/or frequencies designated for control and information, i.e., non-payload messages. Payload refers to the information content of the transmission, wherein for a broadcast session the payload is the broadcast content, i.e., the video program, etc. When a broadcast service subscriber desires to receive a broadcast session, i.e., a particular broadcast scheduled program, the MS 210 reads the overhead messages and learns the appropriate configurations. The MS 210 then tunes to the frequency containing the HSBS channel, and receives the broadcast service content.

In order for the MSs 210 to discover and listen to broadcast channels successfully, various broadcast service related parameters are transmitted over the air interface. The broadcast service is designed to support different protocol options in the protocol stack. This requires the receivers of the broadcast service be informed of the protocol options selected to facilitate proper decoding and processing of the broadcast. In one embodiment, the CS 202 provides this information to the receiver as an overhead system parameter message, consistent with cdma2000 standard. The advantage to the receiver is the ability to receive the information immediately from the overhead message. In this way, the receiver may immediately determine whether the receiver has sufficient resources to receive the broadcast session. The receiver monitors the overhead system parameter messages. The system may implement a service option number corresponding to a set of parameters and protocols, wherein the service option number is provided in the overhead message. Alternately, the system may provide a set of bits or flags to indicate the different protocol options selected. The receiver then determines the protocol options for decoding the broadcast session correctly.

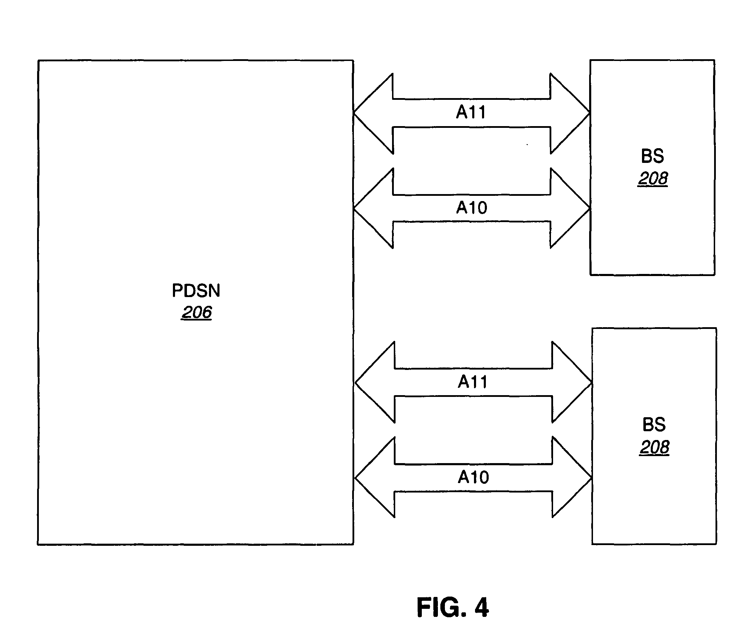

Referring now to FIG. 4, the PDSN 206 has multiple interfaces with one or more BSs 208. In the embodiment described herein, the PDSN 206 has a signaling connection with the BS 208, which will be referred to as the A11 interface. In addition, there is a connection for user traffic between the PDSN 206 and the BS 208, which will be referred to as the A10 interface. The A10 interface is used to provide a path for user traffic between a BS 208 and a PDSN 206 for packet data services. Typically a BS 208 initiates an A10 connection, but either the PDSN 206 or the BS 208 may drop it. The A11 interface is used to provide a signaling connection between a BS 208 and a PDSN 206 for packet data services.

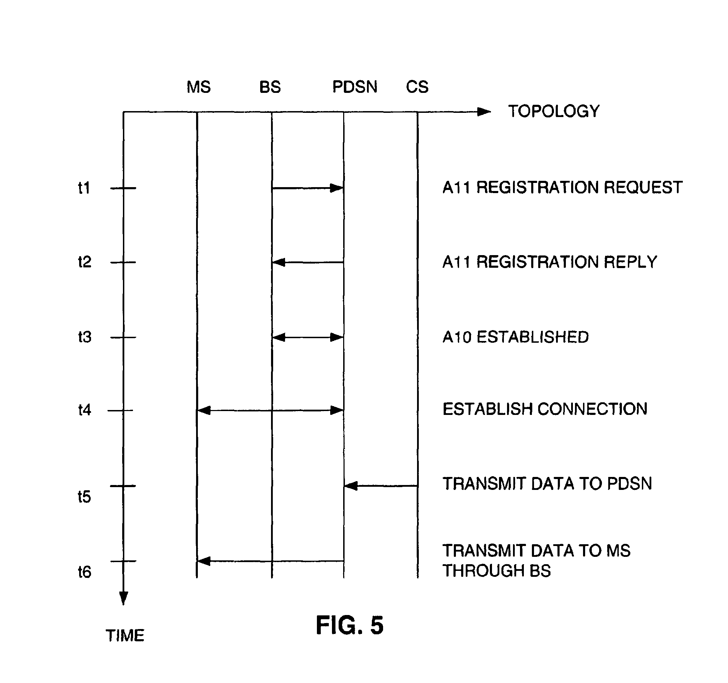

FIG. 5 is a flow diagram illustrating an embodiment of the establishment of connections for data to be transmitted from the CS 202 to an MS 210. The horizontal axis represents the topology of the system, i.e., infrastructure elements. The vertical axis represents the time line. Those skilled in the art will appreciate that additional steps are not shown in order to focus on the inventive aspects of the embodiments. At time t1 the BS 208 seeks to establish an A10 connection with the PDSN 206 through use of the A11 signaling connection. According to the exemplary flow as shown, the BS 208 sends an A11 registration request message to the PDSN 206. The BS 208 sends an A11-registration request message to the same PDSN 206 currently in use to establish a new A10 (bearer) connection between the BS 208 and PDSN 206. The A11 message contains the service option number (HSG) and the SR_ID parameter.

At time t2 the PDSN 206 sends an A11 registration reply message back to the BS 208 to establish the A10 connection at time t3. Once the A10 connection is established, at time t4 a connection is established between the PDSN 206 and the MS 210 through use of the newly established A10 connection. The CS 202 may then transmit data to the PDSN 206 at time t5, and the PDSN 206 sends this data to the MS 210 through the BS 208 at time t6. Note that RTSP and SDP are standardized approaches for establishing a uni-directional streaming service in IETF and in 3GPP2.

In one embodiment, the broadcast channel protocols and parameters may be transmitted to the MS 210. In an alternate embodiment, a Service Option (SO) number is assigned to each set of broadcast protocols and parameters, wherein the SO number is transmitted to the multiple receivers. The MS 210 may use the SO number sent to discover the protocol options of the broadcast service. In contrast to a uni-directional packet data service wherein the SO specifies the protocols up to the IP network layer, the broadcast service specifies protocols up to the application layer.

The SO number is mapped to a set of parameters and protocols sufficient for the MS 210 to receive the desired broadcast. The MS 210 then initiates the protocol stack corresponding to the selected SO number. Once the protocol stack is initiated, the MS 210 is able to receive and decode information received on the broadcast channel.

The PDSN 206 may support and implement various types of compression to reduce the amount of traffic that is sent to the BS 208. The PDSN 206 may support the following header compression algorithms: Van Jacobson TCP/IP header compression (RFC 1144), Header compression (RFC 2507), Compressed RTP/UDP/IP header (RFC 2508), Header stripping/generation technique (Wireless IP Network Standard, Document Identification Number 3GPP2 P.S0001-B).

When the PDSN 206 receives IP packets it determines where to send the IP packets and how the packets are to be compressed. The PDSN 206 mapping (a forwarding-type function) the IP packets to an A10 connection may be referred to as flow mapping. The way the PDSN 206 compresses the IP packets may be referred to as flow treatment. As used herein, a flow is a series of packets that share a specific instantiation of IETF protocol layers. For example, an RTP flow may consist of the packets of an IP/UDP/RTP protocol instantiation, all of which share the same source and destination IP addresses and UDP port number.

Regarding flow mapping, to send the IP packets to the correct MS 210, the PDSN 206 accurately maps the incoming IP packets to an A10 connection so that the packets may be transmitted to the correct MS 210. The IP packets are then sent to the BS 208 on the A10 connection. The BS 208 then sends the IP packets to the MS 210.

Concerning flow treatment, the PDSN 206 compresses the IP packets using a determined compression method and then transmits the packets to the BS 208. As stated, the BS 208 sends the IP packets to the MS 210. The MS 210 may then decompress the IP packets.

The BS 208 may provide to the PDSN 206 the flow treatment and flow mapping information by sending flow treatment and mapping data 602 to the PDSN 206 during the A10 connection setup. One other method that may be used to provide the flow treatment and flow mapping information to the PDSN 206 is by using the Multi Channel Flow Treatment Protocol (MCFTP). MCFTP is developed in 3GPP2 and is described in the 3GPP2 document, P.S0001-B, "Wireless IP Network Standards,". The apparatus and methods disclosed herein for providing the flow treatment and flow mapping information to the PDSN 206 are alternatives to MCFTP that provide certain benefits over MCFTP.

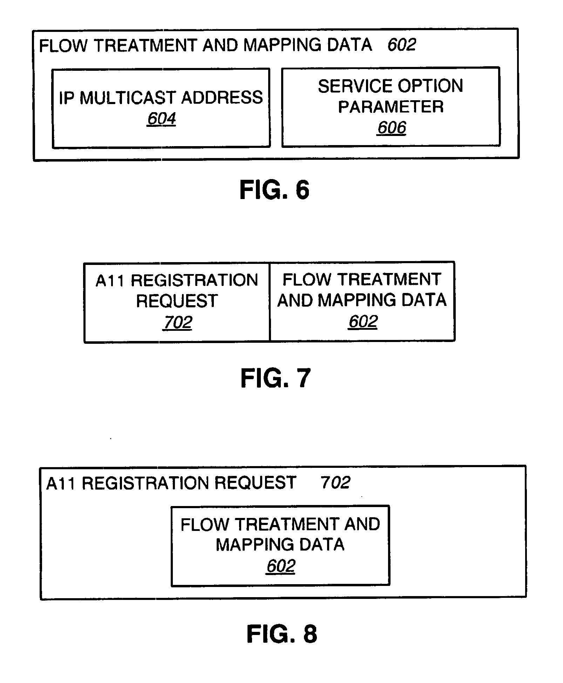

An embodiment of flow treatment and mapping data 602 is illustrated in FIG. 6. As shown, this embodiment of flow treatment and mapping data 602 includes an IP multicast address 604 and a service option parameter 606. The IP multicast address 604 is used to map the broadcast/multicast packet flow (identified by that address in the IP packet header) to the appropriate A10 connection. The service option parameter 606 is used to indicate whether header compression should be enabled, and if it is enabled, which header compression algorithm should be used.

The BS 208 provides the flow treatment and mapping data 602 to the PDSN 206. Those skilled in the art will appreciate the various ways in which the flow treatment and mapping data 602 may be provided to the PDSN 206. In one embodiment, and as shown in FIG. 7, the flow treatment and mapping data 602 may be appended to the A11 registration request message 702 that is sent by the BS 208 to the PDSN 206 in setting up the A10 connection (illustrated in FIG. 5). Alternatively, and as shown in FIG. 8, the flow treatment and mapping data 602 may be sent as part of the A11 registration request message 702.

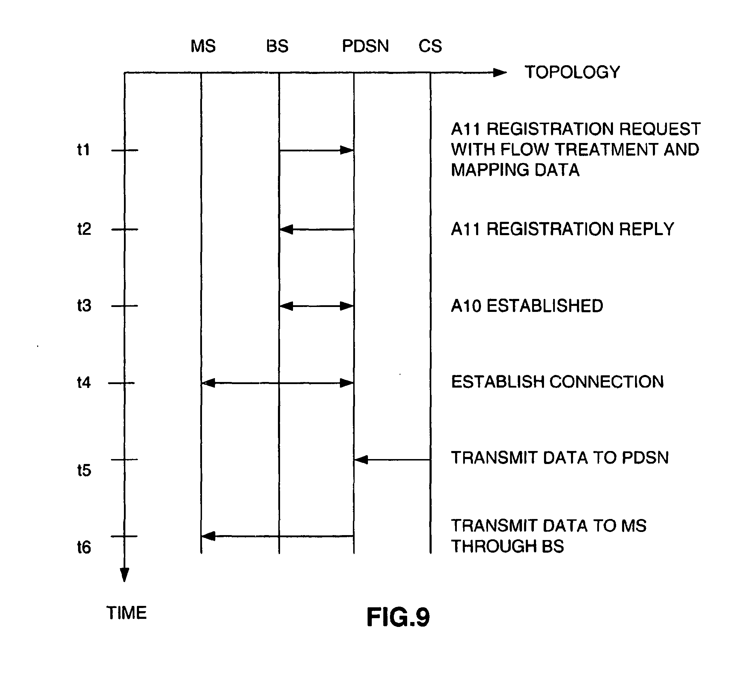

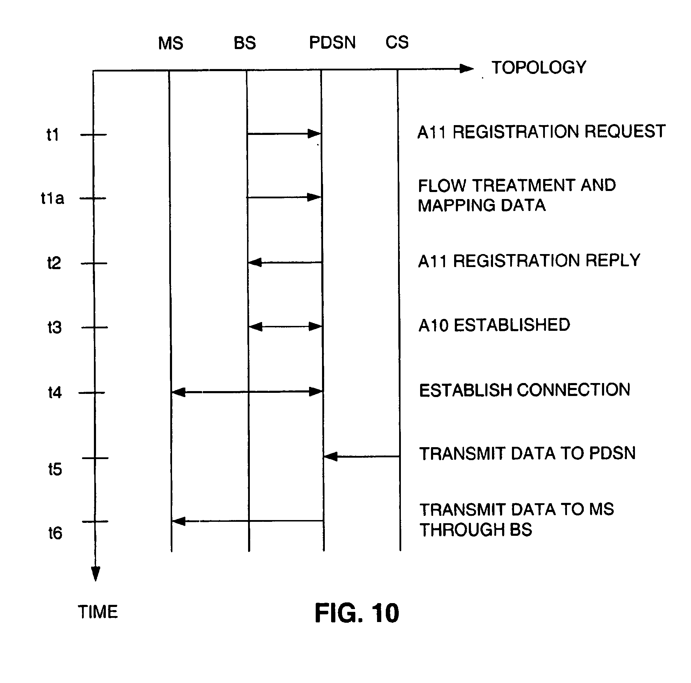

FIG. 9 is a flow diagram illustrating the BS 208 sending the flow treatment and mapping data 602 in the establishment of connections for data to be transmitted from the CS 202 to the MS 210. As shown at time t1, an A11 Registration Request message 702 that includes the flow treatment and mapping data 602 may be sent from the BS 208 to the PDSN 206. Alternatively, and as shown in FIG. 10, the flow treatment and mapping data 602 may be sent immediately after the A11 Registration Request message 702 at time t1 a. Those skilled in the art will appreciate the various means that may be used to communicate the flow treatment and mapping data 602 from the BS 208 to the PDSN 206.

The BS 208 may obtain the flow treatment and mapping data 602 in a variety of ways. For example, the MS 210 may send the flow treatment and mapping data 602 to the BS 208. Alternatively, the BS 208 may be preconfigured with the flow treatment and mapping data 602.

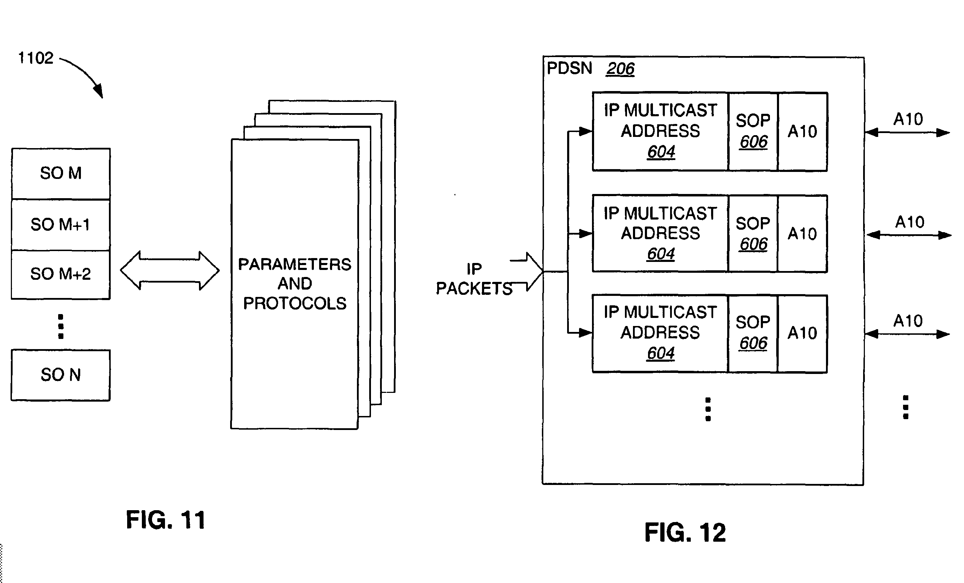

As indicated above with respect to FIG. 6, a service option parameter 606 is part of the flow treatment and mapping data 602. The service option parameter 606 indicates to the PDSN 206 what kind of header compression is to be used for the IP packets being sent to the corresponding IP multicast address 604. FIG. 11 illustrates a mapping 1102 of different service option ("SO") parameters to a set of parameters and protocols. The PDSN 206 is preconfigured with knowledge of the various service option parameter numbers (SO M .. SO N) so that the PDSN 206 may obtain the needed parameters and protocols once the service option parameter 606 is known.

FIG. 12 is a block diagram of an embodiment of a PDSN 206 showing flow treatment and flow mapping. In the embodiment of FIG. 12, the PDSN 206 stores any flow treatment and mapping data 602 so that each piece of data 602 may be accessed based on the IP multicast address 604. Based on the IP multicast address 604, the PDSN 206 may determine which A10 connection to map the flow to and which service option parameter 606 to use in determining how to compress and treat the flow.

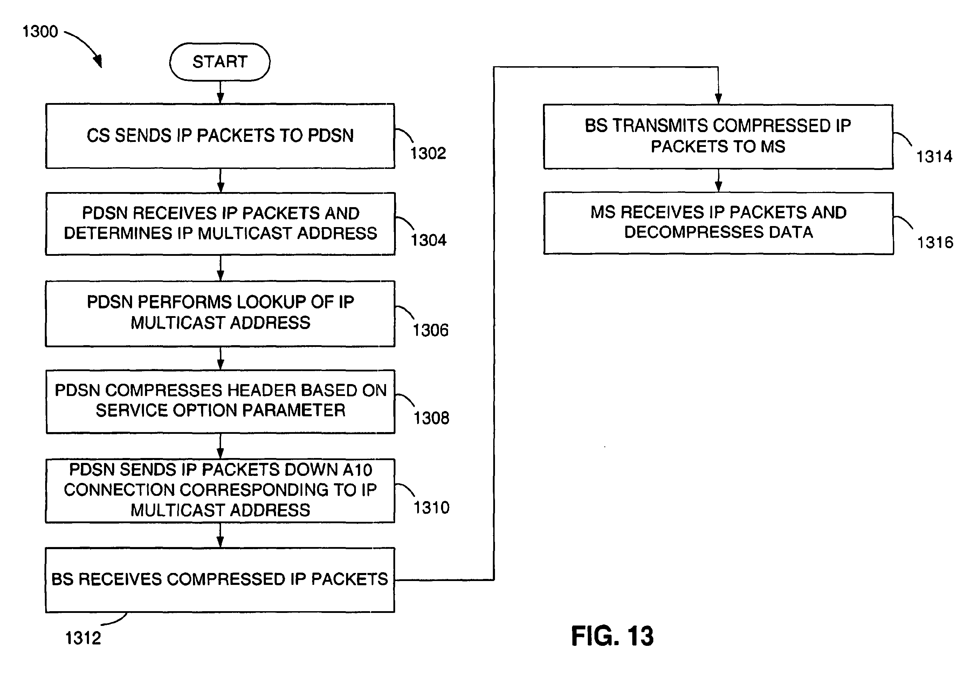

FIG. 13 illustrates an embodiment of a method for sending IP packets from a CS 202 to an MS 210 using the flow treatment and mapping data 602 disclosed herein. The flow diagram of FIG. 13 assumes that the flow treatment and mapping data 602 has already been communicated to the PDSN 206 by the BS 208. The CS 202 sends 1302 IP packets to the PDSN 206. The IP packets are typically sent through an IP network 204. The PDSN 206 receives 1304 the IP packets and determines the IP multicast address. The PDSN 206 identifies the IP multicast address from the address in the packet header. The PDSN 206 then performs 1306 a lookup of the IP multicast address to identify the corresponding flow treatment and mapping data 602. By looking up the IP multicast address, the PDSN 206 finds which A10 connection the IP packets are to be mapped to and how the IP packets are to be treated. The PDSN 206 then compresses 1308 the header according to the service option parameter 606. After performing the compression needed, the PDSN 206 sends 1310 the processed IP packets down the appropriate A10 connection (i.e., that A10 connection that corresponded to the IP multicast address).

The BS 208 receives 1312 the IP packets from the PDSN 206 and transmits 1314 the IP packets to the MS 210 through a service instance. The MS 210 then receives 1316 the packets and decompresses the header as needed. The MS 210 is then able to access and use the data sent via the IP packets.

The service instance is an abstraction for supporting the transport of one or more traffic classes over the air interface. For example, the cdma2000 wireless IP network supports three types of service instances: SI-TYPE_1, SI-TYPE_2 and SI-Type_3. The first type, SI-TYPE_1, identifies a service instance that provides an octet stream based, low error air-interface transport for traffic that is delay insensitive and error sensitive. The second type, SI-TYPE_2, identifies a service instance that provides a frame based air-interface transport for cdma2000 voice codecs that operate synchronously with the cdma2000 air framing. Finally, the SI-TYPE_3 type identifies a service instance that provides an octet stream based air-interface transport for traffic that is delay sensitive and error insensitive.

In the embodiments discussed herein, the PDSN 206 is configured to support a single PPP session over multiple A10 connections for the same MS 210. Each A10 connection corresponds to a service instance.

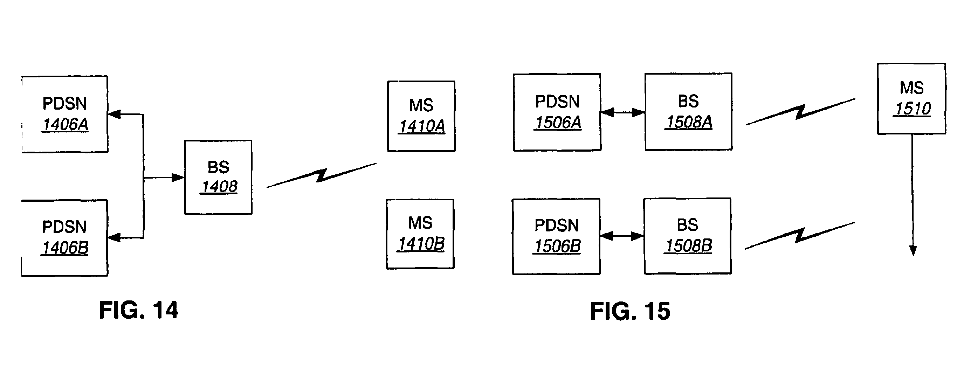

As mentioned above, one alternative method for providing the flow treatment and flow mapping information to the PDSN 206 is through use of MCFTP. However, the apparatus and methods disclosed herein overcome disadvantages of MCFTP for supporting broadcast/multicast services. FIGs. 14 and 15 illustrate disadvantages of MCFTP and how the embodiments disclosed may be used to overcome those disadvantages.

It is possible in a certain network topology that the MS 210 receives broadcast/multicast packet flows from one PDSN 206 but has established a PPP session with a different PDSN 206. For example, in FIG. 14 a first MS 1410A establishes a PPP session with a first PDSN 1406A. A second MS 1410B establishes a PPP session with a second PDSN 1406B, but the broadcast/multicast packet flows are sent from the first PDSN 1406A. If MCFTP is used the flow treatment and mapping information that the second MS 1410B sends to the second PDSN 1406B via MCFTP over the PPP session is not used because the broadcast/multicast packet flow does not go through the second PDSN 1406B. As a result, unnecessary information is kept in the second PDSN 1406B thereby unnecessarily using the second PDSN's 1406B internal resources. Another disadvantage is that unnecessary MCFTP messages are exchanged, wasting over-the-air resources. By using the apparatus and methods disclosed herein, the second MS 1410B does not need to send flow treatment and mapping information to the second PDSN 1406B.

FIG. 15 illustrates a PDSN-to-PDSN handoff. During a PDSN-to-PDSN handoff, the MS 1510 moves from a first PDSN 1506A to a second PDSN 1506B as shown. If MCFTP is used, the MS 1510 needs to establish a PPP session with the second PDSN 1506B and send the flow treatment and mapping information via MCFTP to the second PDSN 1506B before the MS 1510 can receive the broadcast/multicast flow from the second PDSN 1506B. As a result, there are delays associated with PPP session establishment and MCFTP messages exchanged during the PDSN-to-PDSN handoff. Through use of the embodiments disclosed herein, there is no need for the MS 1510 to establish a PPP session with the second PDSN 1506B and send MCFTP messages. Without the added delay caused by the PPP session establishment and MCFTP message exchange, the MS 1510 can quickly view the broadcast/multicast service after the handoff with minimal service interruption.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention as defined in the appended claims. Thus, the present invention is not intended to be limited to the embodiments shown herein but is to be accorded the widest scope consistent with the principles and novel features disclosed herein.

## Claims

1. A method for supporting a broadcast service in a wireless communication system (200), said method comprising:
receiving at a packet data serving node an IP multicast address and a service option parameter for the broadcast service from a base station (208) during establishment of a user traffic channel between a packet data serving node (206) and a base station (208);
receiving at said packet data serving node a broadcast packet flow sent via an IP network (204);
using the service option parameter to determine header compression;
compressing a packet header of the broadcast packet flow; and
mapping the broadcast packet flow identified by the packet header to the user traffic channel using the IP multicast address.

2. The method as in claim 1, wherein the broadcast service is transmitted by a content server.

3. The method as in claim 1, wherein the broadcast service is transmitted as Internet Protocol data packets.

4. The method as in claim 2, wherein the content server serves the broadcast packet flow to the packet data serving node (206) via the IP network (204).

5. The method as in claim 1, wherein the broadcast packet flow comprises video data.

6. The method as in claim 1, wherein the broadcast packet flow comprises audio data.

7. The method as in claim 1, wherein the user traffic channel is an A10 connection.

8. The method as in claim 1, wherein the IP multicast address and the service option parameter are received over a signaling connection between the packet data serving node (206) and the base station (208).

9. The method as in claim 8, wherein the signaling connection is an A11 connection.

10. The method as in claim 9, wherein the IP multicast address and the service option parameter are transmitted with an A11 registration request message.

11. A packet data serving node (206) for supporting a broadcast service comprising:
means for receiving flow treatment and mapping data for the broadcast service from a base station (208) during establishment of a user traffic channel with the base station (208);
means for receiving a broadcast packet flow;
means for using a service option parameter from the flow treatment and mapping data to determine header compression;
means for compressing a packet header of the broadcast packet flow; and
means for mapping the broadcast packet flow identified by the packet header to the user traffic channel using an IP multicast address from the flow treatment and mapping data.

12. The packet data serving node (206) as in claim 11, wherein the broadcast packet flow is transmitted by a content server.

13. The packet data serving node (206) as in claim 11, wherein the broadcast packet flow is transmitted as Internet Protocol data packets.

14. The packet data serving node (206) as in claim 11, wherein a content server (202) serves the broadcast packet flow to the packet data serving node via an IP network (204).

15. The packet data serving node (206) as in claim 11, wherein the broadcast packet flow comprises video data.

16. The packet data serving node (206) as in claim 11, wherein the broadcast packet flow comprises audio data.

17. The packet data serving node (206) as in claim 11, wherein the user traffic channel is an A10 connection.

18. The packet data serving node (206) as in claim 11 wherein the IP multicast address and the service option parameter are received over a signaling connection between the packet data serving node (206) and the base station (208).

19. The packet data serving node (206) as in claim 18, wherein the signaling connection is an A11 connection.

20. The packet data serving node (206) as in claim 19, wherein the IP multicast address and the service option parameter are transmitted with an A11 registration request message.

21. A base station (208) for use in a wireless communication system (200) supporting a broadcast service, wherein the base station (208) is configured to implement a method comprising:
configuring flow treatment and mapping data for said broadcast service comprising an IP multicast address and a service option parameter;
establishing a signaling connection with a packet data serving node (206);
requesting a user traffic channel with the packet data serving node (206) through the signaling connection;
sending the flow treatment and mapping data to the packet data serving node during user traffic channel setup;
establishing the user traffic channel with the packet data serving node; and
receiving IP packets on the user traffic channel, wherein the IP packets are addressed to the IP multicast address and wherein a packet header of the IP packets is compressed according to the service option parameter.

22. The base station (208) as in claim 21, wherein the IP packets comprise video data.

23. The base station (208) as in claim 21, wherein the IP packets comprise audio data.

24. The base station (208) as in claim 21, wherein the user traffic channel is an A10 connection.

25. The base station (208) as in claim 21, wherein the signaling connection is an A11 connection.

26. The base station (208) as in claim 21, wherein the flow treatment and mapping data are sent to the packet data serving node as part of an A11 registration request message.

## Patentansprüche

1. Verfahren zum Unterstützen eines Broadcast- bzw. Sendedienstes in einem Drahtloskommunikationssystem (200), wobei das Verfahren Folgendes aufweist:
Empfangen einer IP-Multicast-Adresse und eines Dienstoptionsparameters für den Sendedienst an einem Paketdatendienstknoten bzw. PDSN (PDSN = Packet Data Serving Node) von einer Basisstation (208) während dem Aufbau eines Nutzerverkehrskanals zwischen einem Paketdatendienstknoten (206) und einer Basisstation (208);
Empfangen eines Sendepaketflusses, der über ein IP-Netzwerk (204) gesendet wird, an dem Paketdatendienstknoten;
Verwenden des Dienstoptionsparameters, um die Header-Kompression zu bestimmen;
Komprimieren eines Paket-Headers des Sendepaketflusses; und
Abbilden des Sendepaketflusses, der durch den Paket-Header identifiziert wird, auf den Nutzerverkehrskanal unter Verwendung der IP-Multicast-Adresse.

2. Verfahren nach Anspruch 1, wobei der Sendedienst von einem Content-Server gesendet wird.

3. Verfahren nach Anspruch 1, wobei der Sendedienst als Internetprotokoll-Datenpakete gesendet wird.

4. Verfahren nach Anspruch 2, wobei der Content-Server den Sendepaketfluss an den Paketdatendienstknoten (206) über das IP-Netzwerk (204) bedient.

5. Verfahren nach Anspruch 1, wobei der Sendepaketfluss Videodaten aufweist.

6. Verfahren nach Anspruch 1, wobei der Sendepaketfluss Audiodaten aufweist.

7. Verfahren nach Anspruch 1, wobei der Nutzerverkehrskanal eine A10-Verbindung ist.

8. Verfahren nach Anspruch 1, wobei die IP-Multicast-Adresse und der Dienstoptionsparameter über eine Signalisierungsverbindung zwischen dem Paketdatendienstknoten (206) und der Basisstation (208) empfangen werden.

9. Verfahren nach Anspruch 8, wobei die Signalisierungsverbindung eine A11-Verbindung ist.

10. Verfahren nach Anspruch 9, wobei die IP-Multicast-Adresse und der Dienstoptionsparameter mit einer A11-Registrierungsanfragenachricht übertragen bzw. gesendet werden.

11. Ein Paketdatendienstknoten (206) zum Unterstützen eines Broadcast- bzw. Sendedienstes der Folgendes aufweist:
Mittel zum Empfangen von Flussbearbeitungs- und -abbildungsdaten für den Sendedienst von einer Basisstation (208) während des Aufbaus eines Nutzerverkehrskanals mit der Basisstation (208);
Mittel zum Empfangen eines Sendepaketflusses;
Mittel zur Verwendung eines Dienstoptionsparameters von den Flussbearbeitungs- und -abbildungsdaten, um eine Header-Kompression zu bestimmen;
Mittel zum Komprimieren eines Paket-Headers des Sendepaketflusses; und
Mittel zum Abbilden des Sendepaketflusses, der durch den Paketheader identifiziert wird, auf den Nutzerverkehrskanal unter Verwendung einer IP-Multicast-Adresse von den Flussbearbeitungs- und -abbildungsdaten.

12. Paketdatendienstknoten (206) nach Anspruch 11, wobei der Sendepaketfluss durch einen Content-Server gesendet wird.

13. Paketdatendienstknoten (206) nach Anspruch 11, wobei der Sendepaketfluss als Internetprotokoll-Datenpakete gesendet wird.

14. Paketdatendienstknoten (206) nach Anspruch 11, wobei ein Content-Server (202) den Sendepaketfluss an den Paketdatendienstkonten über ein IP-Netzwerk (204) bedient bzw. liefert.

15. Paketdatendienstknoten (206) nach Anspruch 11, wobei der Sendepaketfluss Videodaten aufweist.

16. Paketdatendienstknoten (206) nach Anspruch 11, wobei der Sendepaketfluss Audiodaten aufweist.

17. Paketdatendienstknoten (206) nach Anspruch 11, wobei der Nutzerverkehrskanal eine A10-Verbindung ist.

18. Paketdatendienstknoten (206) nach Anspruch 11, wobei die IP-Multicast-Adresse und der Dienstoptionsparameter über eine Signalisierungsverbindung zwischen dem Paketdatendienstknoten (206) und der Basisstation (208) empfangen werden.

19. Paketdatendienstknoten (206) nach Anspruch 18, wobei die Signalisierungsverbindung eine A11-Verbindung ist.

20. Paketdatendienstknoten (206) nach Anspruch 19, wobei die IP-Multicast-Adresse und der Dienstoptionsparameter mit einer A11-Registrierungsanfragenachricht übertragen bzw. gesendet werden.

21. Eine Basisstation (208) zur Verwendung in einem Drahtloskommunikationssystem (200), das einen Broadcast- bzw. Sendedienst unterstützt, wobei die Basisstation (208) konfiguriert ist, um ein Verfahren zu implementieren, das Folgendes aufweist:
Konfigurieren von Flussbearbeitungs- und -abbildungsdaten für den Sendedienst, die eine IP-Multicast-Adresse und einen Dienstoptionsparameter aufweisen;
Aufbauen einer Signalisierungsverbindung mit einem Paketdatendienstknoten (206);
Anfordern eines Nutzerverkehrskanals mit dem Paketdatendienstknoten (206) durch die Signalisierungsverbindung;
Senden der Flussbearbeitungs- und -abbildungsdaten an den Paketdatendienstknoten während einer Nutzerverkehrskanaleinrichtung;
Aufbauen des Nutzerverkehrskanals mit dem Paketdatendienstknoten; und
Empfangen von IP-Paketen auf dem Nutzerverkehrskanal, wobei die IP-Pakete an die IP-Multicast-Adresse adressiert sind und wobei ein Paket-Header der IP-Pakete gemäß dem Dienstoptionsparameter komprimiert ist.

22. Basisstation (208) nach Anspruch 21, wobei die IP-Pakete Videodaten aufweisen.

23. Basisstation (208) nach Anspruch 21, wobei die IP-Pakete Audiodaten aufweisen.

24. Basisstation (208) nach Anspruch 21, wobei der Nutzerverkehrskanal eine A10-Verbindung ist.

25. Basisstation (208) nach Anspruch 21, wobei die Signalisierungsverbindung eine A11-Verbindung ist.

26. Basisstation (208) nach Anspruch 21, wobei die Flussbearbeitungs- und -abbildungsdaten an den Paketdatendienstknoten als Teil einer A11-Registrierungsanfragenachricht gesendet werden.

## Revendications

1. Procédé pour assurer un service diffusé dans un système de communication sans fil (200), le procédé comprenant les étapes suivantes :
recevoir au niveau d'un noeud de service de paquets de données une adresse de multidiffusion IP et un paramètre d'option de service pour le service diffusé, à partir d'une station de base (208) pendant l'établissement d'un canal de communication d'utilisateur entre un noeud de service de paquets de données (206) et une station de base (208) ;
recevoir au niveau du noeud de service de paquets de données un flux de paquets diffusé envoyé par l'intermédiaire d'un réseau IP (204) ;
utiliser le paramètre d'option de service pour déterminer une compression d'entête ;
comprimer un entête de paquet du flux de paquets diffusé ; et
mapper le flux de paquets diffusé identifié par l'entête de paquet vers le canal de communication d'utilisateur en utilisant l'adresse de multidiffusion IP.

2. Procédé selon la revendication 1, dans lequel le service diffusé est transmis par un serveur de contenu.

3. Procédé selon la revendication 1, dans lequel le service diffusé est transmis sous forme de paquets de données au Protocole Internet.

4. Procédé selon la revendication 2, dans lequel le serveur de contenu sert le flux de paquets diffusé au noeud de service de paquets de données (206) par l'intermédiaire du réseau IP (204).

5. Procédé selon la revendication 1, dans lequel le flux de paquets diffusé comprend des données vidéo.

6. Procédé selon la revendication 1, dans lequel le flux de paquets diffusé comprend des données audio.

7. Procédé selon la revendication 1, dans lequel le canal de communication d'utilisateur est une connexion A10.

8. Procédé selon la revendication 1, dans lequel l'adresse de multidiffusion IP et le paramètre d'option de service sont reçus par l'intermédiaire d'une connexion de signalisation entre le noeud de service de paquets de données (206) et la station de base (208).

9. Procédé selon la revendication 8, dans lequel la connexion de signalisation est une connexion A11.

10. Procédé selon la revendication 9, dans lequel l'adresse de multidiffusion IP et le paramètre d'option de service sont transmis avec un message de requête d'enregistrement A11.

11. Noeud de service de paquets de données (206) pour assurer un service diffusé, comprenant :
des moyens pour recevoir des données de traitement et de mappage de flux pour le service diffusé, à partir d'une station de base (208) pendant l'établissement d'un canal de communication d'utilisateur avec la station de base (208) ;
des moyens pour recevoir un flux de paquets diffusé ;
des moyens pour utiliser un paramètre d'option de service à partir des données de traitement et de mappage de flux pour déterminer une compression d'entête ;
des moyens pour comprimer un entête de paquet du flux de paquets diffusé ; et
des moyens pour mapper le flux de paquets diffusé identifié par l'entête de paquet vers le canal de communication d'utilisateur en utilisant une adresse de multidiffusion IP provenant des données de traitement et de mappage de flux.

12. Noeud de service de paquets de données (206) selon la revendication 11, dans lequel le flux de paquets diffusé est transmis par un serveur de contenu.

13. Noeud de service de paquets de données (206) selon la revendication 11, dans lequel le flux de paquets diffusé est transmis sous forme de paquets de données au Protocole Internet.

14. Noeud de service de paquets de données (206) selon la revendication 11, dans lequel un serveur de contenu (202) sert le flux de paquets diffusé au noeud de service de paquets de données par l'intermédiaire d'un réseau IP (204).

15. Noeud de service de paquets de données (206) selon la revendication 11, dans lequel le flux de paquets diffusé comprend des données vidéo.

16. Noeud de service de paquets de données (206) selon la revendication 11, dans lequel le flux de paquets diffusé comprend des données audio.

17. Noeud de service de paquets de données (206) selon la revendication 11, dans lequel le canal de communication d'utilisateur est une connexion A10.

18. Noeud de service de paquets de données (206) selon la revendication 11, dans lequel l'adresse de multidiffusion IP et le paramètre d'option de service sont reçus par l'intermédiaire d'une connexion de signalisation entre le noeud de service de paquets de données (206) et la station de base (208).

19. Noeud de service de paquets de données (206) selon la revendication 18, dans lequel la connexion de signalisation est une connexion A11.

20. Noeud de service de paquets de données (206) selon la revendication 19, dans lequel l'adresse de multidiffusion IP et le paramètre d'option de service sont transmis avec un message de requête d'enregistrement A11.

21. Station de base (208) pour utilisation dans un système de communication sans fil (200) assurant un service diffusé, la station de base (208) étant agencée pour mettre en oeuvre un procédé comprenant les étapes suivantes :
configurer des données de traitement et de mappage de flux pour le service diffusé comprenant une adresse de multidiffusion IP et un paramètre d'option de service ;
établir une connexion de signalisation avec un noeud de service de paquets de données (206) ;
demander un canal de communication d'utilisateur avec le noeud de service de paquets de données (206) par l'intermédiaire de la connexion de signalisation ;
envoyer les données de traitement et de mappage de flux au noeud de service de paquets de données pendant la mise en place du canal de communication d'utilisateur ;
établir le canal de communication d'utilisateur avec le noeud de service de paquets de données ; et
recevoir des paquets IP sur le canal de communication d'utilisateur, les paquets IP étant adressés à l'adresse de multidiffusion IP et un entête de paquet des paquets IP étant compressé conformément au paramètre d'option de service.

22. Station de base (208) selon la revendication 21, dans laquelle les paquets IP comprennent des données vidéo.

23. Station de base (208) selon la revendication 21, dans laquelle les paquets IP comprennent des données audio.

24. Station de base (208) selon la revendication 21, dans laquelle le canal de communication d'utilisateur est une connexion A10.

25. Station de base (208) selon la revendication 21, dans laquelle la connexion de signalisation est une connexion A11.

26. Station de base (208) selon la revendication 21, dans laquelle les données de traitement et de mappage de flux sont envoyées au noeud de service de paquets de données en tant que partie d'un message de requête d'enregistrement A11.
